# EUROPEAN PATENT SPECIFICATION

(11) **EP 0 686 922 B1**
(45) Date of publication and mention of the grant of the patent: **18.04.2001**
(21) Application number: 95108329.4
(22) Date of filing: 31.05.1995
(51) Int. Cl.: G06F 15/78

(54) **Vector processing unit with reconfigurable data buffer**
Vektorverarbeitungseinheit mit rekonfigurierbarem Datenpuffer
Unité de traitement vectoriel avec tampon de données reconfigurable

(30) Priority: 31.05.1994 JP 11778494
(43) Date of publication of application: 13.12.1995
(73) Proprietor: NEC CORPORATION, Tokyo (JP)
(72) Inventor: Omata, Makoto, c/o NEC Kofu Ltd., Kofu-shi, Yamanashi (JP)
(74) Representative: Betten & Resch

(56) References cited:
- EP-A- 0 165 539
- IBM TECHNICAL DISCLOSURE BULLETIN, vol. 28, no. 7, December 1985 NEW YORK, US, pages 2928-2934, ANONYMOUS 'System Architecture for Efficient PIPELINE Execution of List-Directed Repetitive Processes and General-Purpose Emulation'
- PATENT ABSTRACTS OF JAPAN vol. 016 no. 143 (P-1335) ,9 April 1992 & JP-A-04 000557 (MITSUBISHI ELECTRIC CORP) 6 January 1992,
- COMPUTER ARCHITECTURE NEWS, vol. 17, no. 2, 1 April 1989 pages 134-143, JOUPPI N P ET AL 'A UNIFIED VECTOR/SCALAR FLOATING-POINT ARCHITECTURE'

## Description

### BACKGROUND OF THE INVENTION

### Field of the Invention

The present invention relates to a vector processing unit, and, more particularly, to a vector processing unit having a data buffer between a storage and a vector processor.

### Description of the Prior Art

In a storage shared vector processing unit, a physical distance to the storage tends to be longer as the system becomes larger in its size in view of mounting. Therefore, storage access takes much time.

The vector processing unit attains high speed arithmetic processing by continuously arithmetic processing a large amount of data simultaneously. That is, after a group of operand is loaded from the storage to a vector register, arithmetic processing is performed by supplying the arithmetic operand to a processor from the vector register. Then, the result is stored again in the vector register the content of which is in turn stored in the storage.

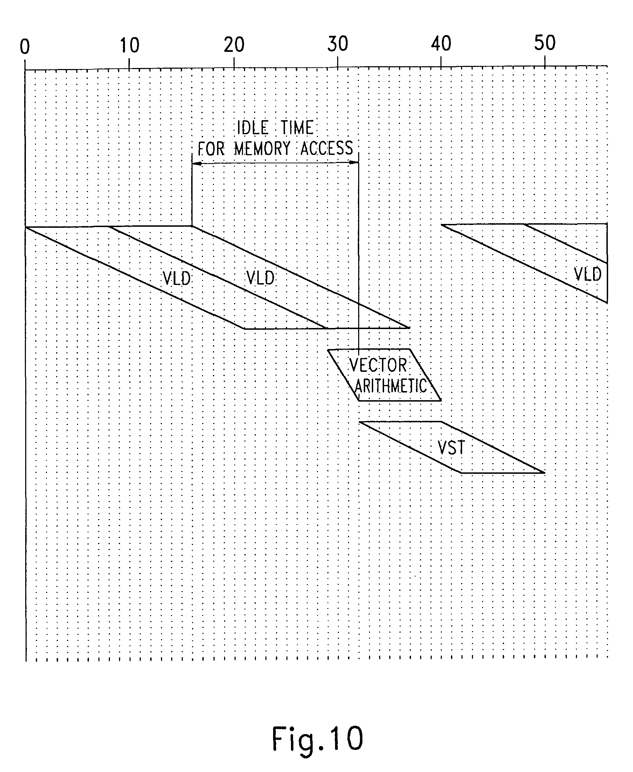

Referring to FIG. 10, there is shown an example of operation in a conventional vector processing unit where vector processing is performed by transferring data between the storage and the vector register without providing any buffer. In the example, the vector processing is performed by using data from the storage with two vector load instructions VLD, and then the result of processing is written in the storage with a vector store instruction VST. Therefore, there arises idle time because of storage access. As the idle time for storage access becomes longer, idle time in the processing unit also becomes longer so that the usage efficiency of the processor is being deteriorated.

In addition, since a plurality of vector processors is provided in the vector processing unit, there is possibility of contention in storage access in each vector processor. Therefore, it is not necessarily guaranteed that data is returned at the minimum access time so that the idle time tends to more and more occur.

In order to solve this problem, the conventional vector processing unit provides a buffer between the vector register and the storage for separating the storage access from the vector processing. This improves the vector processing unit by allowing it to load data in advance so that following vector processing can be continuously performed after storing the data whether or not the storage access is performed.

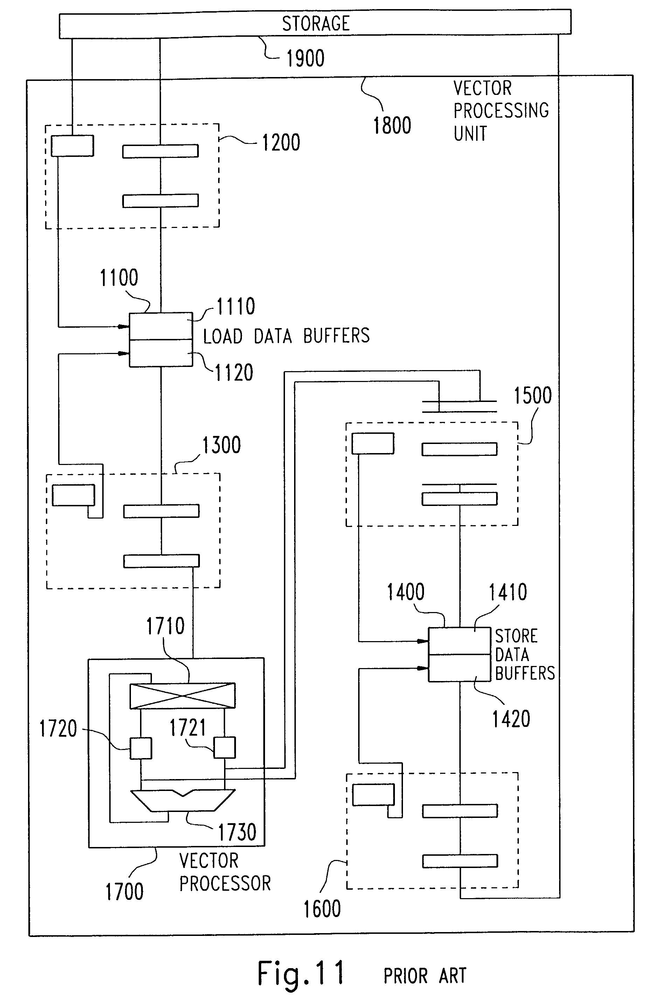

Referring to FIG. 11, the conventional vector processing unit 1800 comprises a vector processor 1700 having a crossbar 1710, vector registers 1720, 1721, and a processor 1730; load data buffers 1100 with a load data buffer storing circuit 1200, and a load data buffer read circuit 1300 for storing vector data to be sent to the vector processor 1700; and store data buffers 1400 with a store data buffer store circuit 1500, and a store data buffer read circuit 1600 for storing the result of processing by the vector processor 1700.

Then, the number of words per each of the load data buffers 1110 and 1120 is designed for the maximum number of elements by a vector instruction. In addition, although the number of load data buffers is two of buffers 1110 and 1120 here, it is designed by estimating the number of load instructions for which data is not returned although the instruction is issued.

Furthermore, the number of words per each of the store data buffers 1410 and 1420 is also designed for the maximum number of elements by a vector instruction. Then, the number is designed by estimating the number of store instructions which may be executed from issuance of a store instruction to storing in a storage 1900.

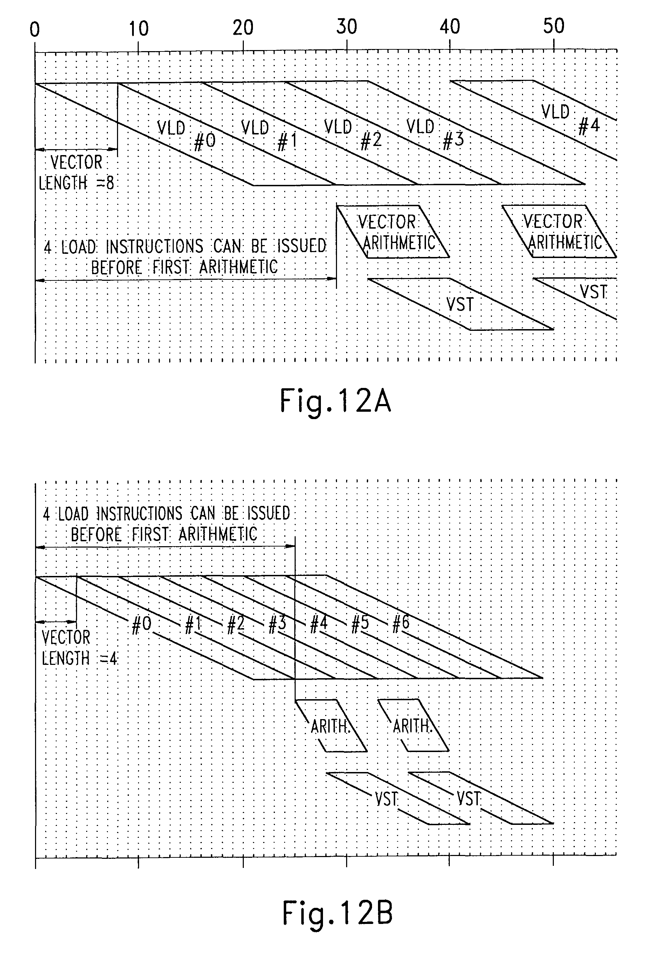

Referring to FIG. 12, if vector length in FIG. 12 (A) is 8, the number of vector load instruction VLD is 4, which can be started for issuance until the vector processing can become executed. In addition, if vector length in FIG. 12 (B) is 4, the number of vector load instruction VLD is 7, which can be started for issuance until the vector processing can become executed. Therefore, although, if the vector length is 8, four load data buffers may be sufficient, seven load data buffers are required if the load vector length is 4.

Next, description is made on the operation of instructions and the result of processing by using an example of an instruction sequence. Here, for the purpose of description, it is assumed that the number of load data buffers and store data buffers is two, respectively, each has a capacity of 8 bytes × 64 words, there are an 8-byte load instruction VLD, an upper 4-byte load instruction VLDU, a lower 4-byte load instruction VLDL, an 8-byte store instruction VST, an upper 4-byte store instruction VSTU, a lower 4-byte store instruction VSTL, a fixed point addition VADD, and a floating point addition VFAD, and the maximum number of vector elements which these instruction can have is 64. Furthermore, the vector registers are refered as V0 and V1.

Here, it is assumed that the instruction sequence shown in FIG. 9 is executed by assuming that the vector length is 16.

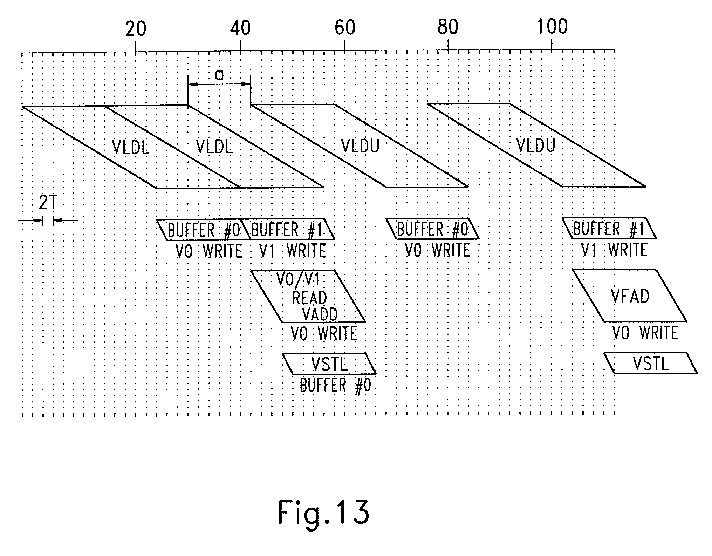

Referring to FIG. 13, when the instruction sequence is processed in the conventional vector processing unit by using two load data buffers, vector load instructions of instructions (1) and (2) are first assigned with the load data buffers 1110 and 1120, respectively. Then, the load data buffers 1110 and 1120 are also used for vector load instructions of instructions (5) and (6). Similarly, vector store instructions of instructions (4) and (8) are assigned with the store data buffers 1410 and 1420, respectively.

In this case, because there are only two load data buffers, the instruction (5) cannot be issued until the load data buffer V0, which is used by the instruction (1), is released. Thus, delay time a shown in FIG. 13 occurs.

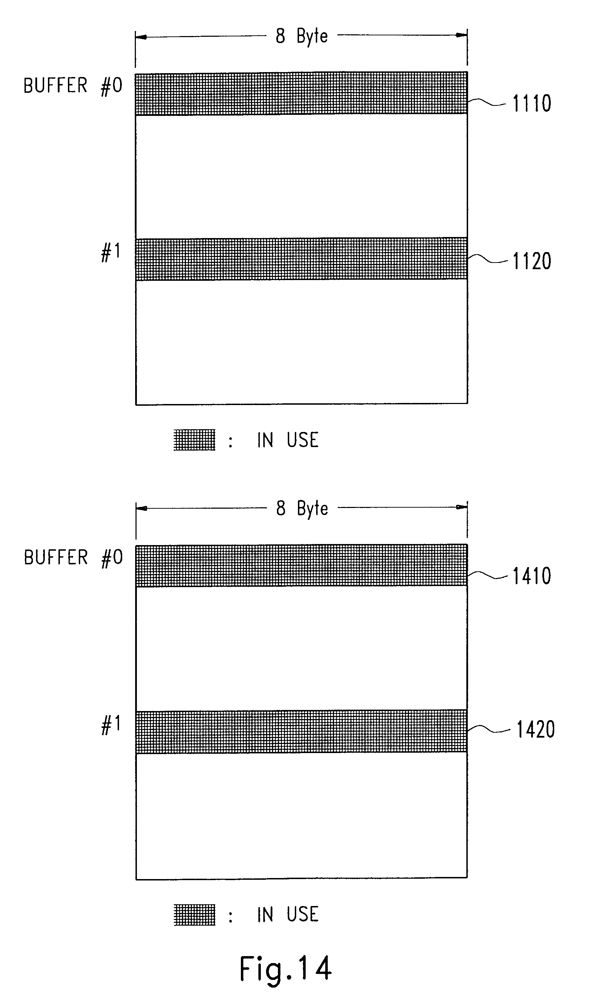

Referring to FIG. 14, since the load data buffers 1110, 1120 and the store data buffers 1410, 1420 are configured in a fixed size, there is a possibility that a number of waste regions is caused in the load data buffers 1110, 1120, and the store data buffers 1410, 1420 if the vector is short.

As an example of such conventional vector processing unit, European Patent Application No. 445,802-A2 describes a vector processing unit with store buffer.

As described above, because the conventional vector processing unit has the fixed number and capacity of data buffers, it has a disadvantage that the usage efficiency is degraded depending on a program configuration. That is, when vector length is long, there is little impact on the performance even if the number of data buffers is relatively small. However, if vector length is short, the vector processor may not be efficiently utilized without providing a large number of data buffers. On the other hand, because vector length depends on a program, a relatively large number of data buffers should be provided for a case where the vector length is short to fully extract the performance of the conventional vector processing unit regardless of the vector length, which causes a problem that the amount of hardware is increased.

From EP-A-0165539 a vector processing system is known having a vector processing unit, a main store and a buffer store connected between the vector processing unit and the main store. The buffer store contains one or more virtual vector register operable under user control in register-to-register vector operations. A user instruction specifies the length of a vector operand to be processed, the type of operation to be performed, and which registers will be used.

From "IBM Technical Disclosure Bulletin", December 1985, vol. 8, no. 7, pages 2928 - 2934, a system architecture for efficient pipeline execution of a list-directed repetetive process and general purpose simulation is known. The pipeline is basically a vector processor and the address space of data buffers is most frequently treated as said of virtual vector registers. These can be defined to have a variety of length and formats . The existence of the virtual vector registers is a convenient architectural feature for support of the "dynamic binding" of RR macros to form DO-LOOP specific super macros during AP executive service.

### SUMMARY OF THE INVENTION

An object of the present invention is to solve the above problems and to efficiently use the data buffers.

Another object of the present invention is not to cause waiting of the data buffers even for a short vector length so that the performance of the vector processor is fully extracted.

The present invention provides a vector processing unit as defined in claim 1.

In a preferred embodiment of the present invention, the vector processing unit according to the present invention is a vector processing unit comprising a vector processor and having a data buffer between the vector processor and a storage, wherein the data buffer is variably arranged for the number of word which can be stored and the number of division of the buffer. In addition, the data buffer may be variably arranged for data width per word.

### BRIEF DESCRIPTION OF THE DRAWINGS

An aspect of the present invention becomes clearer when it is describe in respect to the following drawings, in which:
FIG. 1 is a diagram showing a configuration of a vector processing unit according to the present invention;
FIG. 2 is a configuration of load data buffer in the present invention;
FIG. 3 is a diagram showing the number of storing elements of the load data buffer in the present invention;
FIG. 4 is a configuration of load data store circuit in the present invention;
FIG. 5 is a diagram showing how to generate a data buffer address in the present invention;
FIG. 6 is a configuration of load data read circuit in the present invention;
FIG. 7 is a diagram showing operation of vector processing in the present invention;
FIG. 8 is a diagram showing how to use the load data buffer and the store data buffer in the present invention;
FIG. 9 is an example of instruction sequence used for describing the present invention and the prior art;
FIG. 10 is a diagram showing operation of vector processing in a conventional vector processing unit without data buffer;
FIG. 11 is a configuration of conventional vector processing unit with data buffer;
FIG. 12 is a diagram showing operation of vector processing in an ideal vector processing unit with a number of data buffers;
FIG. 13 is a diagram showing operation of vector processing in a conventional vector processing unit with data buffer; and
FIG. 14 is a diagram showing how to use the load data buffer and the store data buffer in the conventional vector processing unit.

### DETAILED DESCRIPTION OF THE PREFERRED EMBODIMENTS

An embodiment of the present invention will be explained in detail by referring to the drawings.

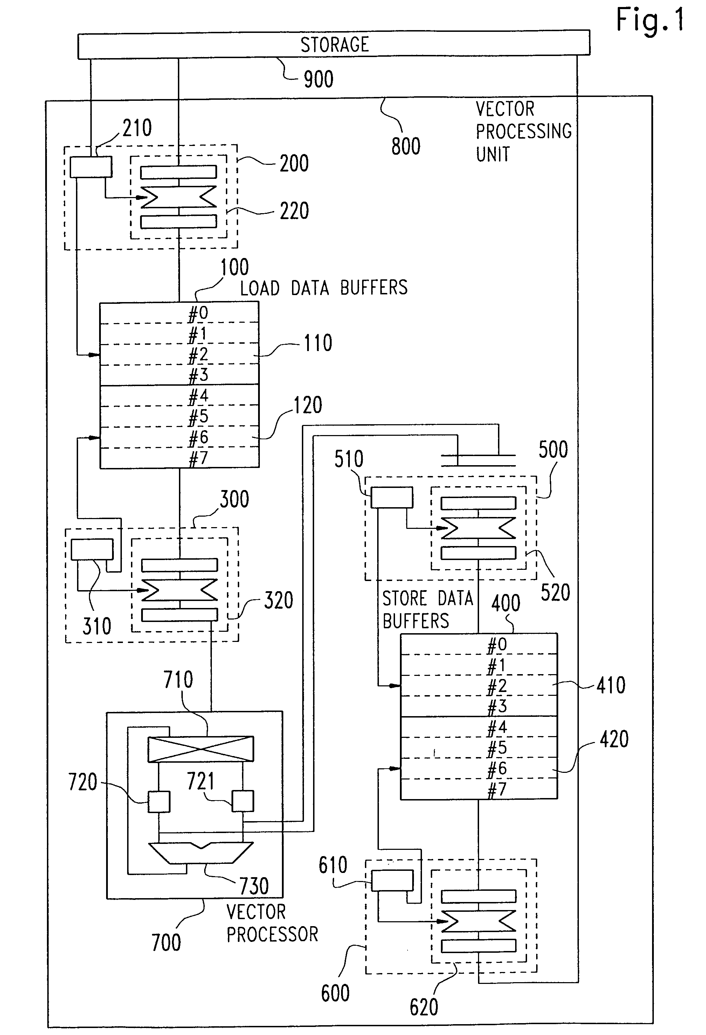

Referring to FIG. 1, in a preferred embodiment of the present invention, a vector processing unit 800 comprises a vector processor 700 connecting to a storage 900 and performing vector processing, load data buffers 100 storing vector data to be supplied to the vector processor 700, and store data buffers 400 storing results of processing by the vector processor 700. In addition, there are provided a load data buffer storing circuit 200 and a load data read circuit 300 for storing and reading the vector data to and from the load data buffers 100. Similarly, there are provided a store data buffer store circuit 500 and store data buffer read circuit 600 for storing and reading the vector data to and from the store data buffers 400. Furthermore, the vector processor 700 comprises vector registers 720 and 721 for holding vector data, a processor 730, and a crossbar 710 for transmitting the result of processing to the vector registers.

For the simplicity of description, it is assumed that the embodiment has each two load data buffers and store data buffers, and each data buffer has a capacity of 8 bytes x 64 words. In addition, the number of buffers assigned to one data buffer is assumed to be four at maximum. Furthermore, the type of instructions is assumed to include 8 byte load instruction VLD, upper 4 byte load instruction VLDU, lower 4 byte load instruction VLDL, 8 byte store instruction VST, upper 4 byte store instruction VSTU, lower 4 byte store instruction VSTL, fixed point addition VADD, and floating point addition VFAD. Each of these instructions is assumed to be able to specify up to 64 as the vector length. Furthermore, the vector registers are two, V0 and V1.

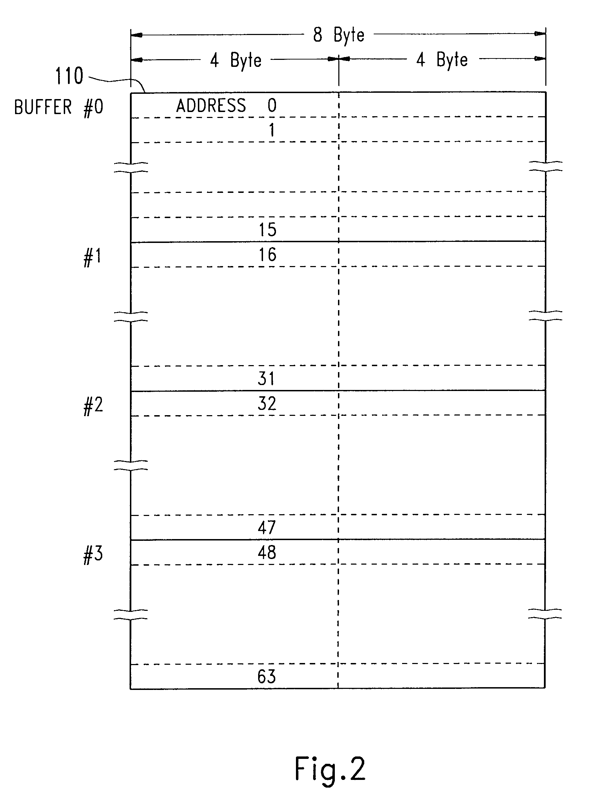

Referring to FIG. 2, the load data buffer 110 is arranged to be able to store 64 words of 8 byte data, and divided into four virtual buffers #0 to #3. Accordingly, addresses 0 to 15 of the load data buffer correspond to the virtual buffer #0, addresses 16 to 31 of the load data buffer to the virtual buffer #1, addresses 32 to 47 of the load data buffer to the virtual buffer #2, the addresses 48 to 63 of the load data buffer to the virtual buffer #3.

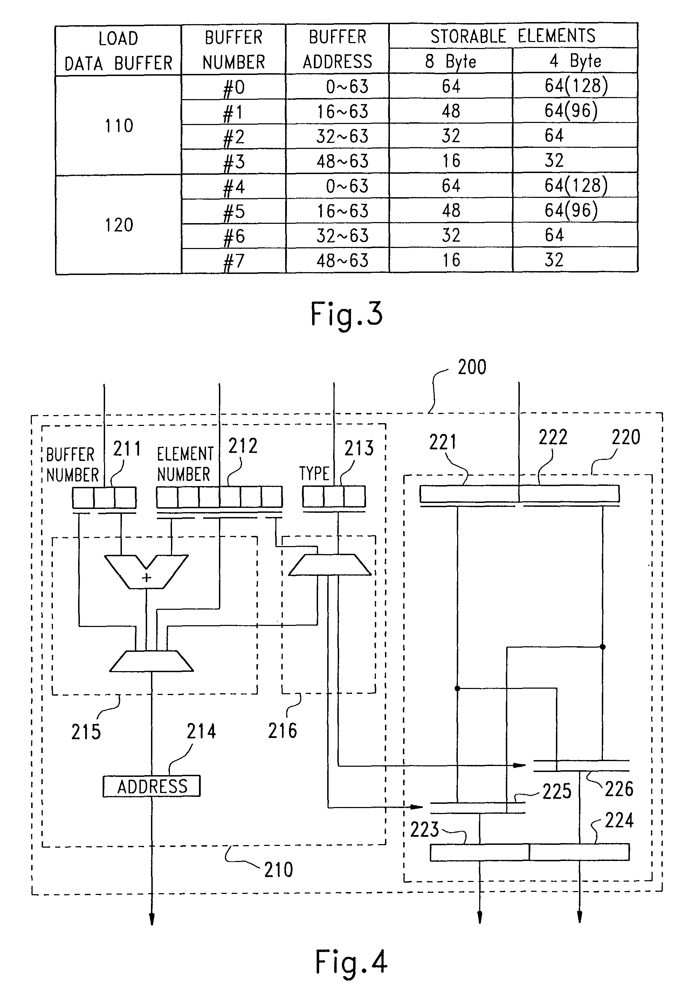

Referring to FIG. 3, a region available in the load data buffer 110 is addresses 0 to 63 when the virtual buffer #0 is specified, addresses 16 to 63 when the virtual buffer #1 is specified, addresses 32 to 63 when the virtual buffer #2 is specified, and addresses 48 to 63 when the virtual buffer #3 is specified. That is, the number of the virtual buffer means the starting address in the load data buffer. Therefore, if there are vector data A and B each having vector length of 32, for example, it is possible to assign the vector data A to the virtual buffer #0 and the vector data B to the virtual buffer #2.

The load data buffer 120 has the same arrangement as the load data buffer 110, except for that the number for virtual buffers is #4 to #7.

The store data buffer 410 also has an arrangement similar to the load data buffer 110. In addition, the store data buffer 420 has the same arrangement as the store data buffer 410, except for that the number for virtual buffers is #4 to #7.

The load data buffers 110 and 120, as well as the store data buffers 410 and 420 are addressed as follows. Because the load data buffers 100 have 128 words as a whole, a word address is represented by seven bits. Accordingly, it is possible to identify either the load data buffer 110 or the load data buffer 120 with its most significant bit. In addition, six bits other than the most significant bit represent a word address in one data buffer. Upper two bits of six bits are used for identify the virtual buffer. That is, for the load data buffer 110, they identify any one of #0 to #3, and, for the load data buffer 120, any one of #4 to #7. Then, the lower four bits of the word address correspond to the element number of each of 16 data in each virtual buffer. This is true for the store data buffers 410 and 420.

In the data buffer arranged as above, when the 8 byte load instruction VLD is executed, while only two buffers #0 and #4 can be used if the vector length VL is 49 ≤ VL ≤ 64, eight buffers from #0 to #7 can be used if it is 1 ≤ VL ≤ 16.

For example, when VLD is executed at VL = 16, and the buffer #0 is used, the result is stored in addresses 0 to 15 of the load data buffer 110, and addresses 16 to 63 are not used. Therefore, if the following VLD is again VL = 16, and, then the buffer #1 is used, the result is stored in addresses 16 to 31 of the load data buffer 110.

Referring to FIG. 4, the load data buffer storing circuit 200 comprises a load data write control circuit 210 which includes a write buffer number register 211 holding the virtual buffer number of a load data buffer, an element number register 212 holding element numbers in virtual buffer of the load data buffer, a write instruction type register 213 holding the type of instruction, a write selector control circuit 216 controlling write selectors 225 and 226 in a load data compressing circuit 220, an address generator circuit 215 generating an address of load data buffer, and a write address register 214 holding the generated address. In addition, the load data buffer storing circuit 200 comprises the load data compressing circuit 220 which includes data receiving registers 221 and 222 receiving data from the storage, write registers 223 and 224 writing data in the load data buffers 100, and an upper write selector 225 and a lower write selector 226 holding data in the data receiving registers 221 and 222 in the write registers 223 and 224.

The load data buffer storing circuit 200 divides 8 byte load data received from the storage 900 into upper 4 bytes and lower 4 bytes, and holds them in the data receiving registers 221 and 222 in the load data compressing circuit 220. Then, it determines the type of instruction loading the data by decoding the write instruction type register 213.

If the type of instruction is 8 byte load instruction VLD, the write selector control circuit 216 controls the upper write selector 225 and the lower write selector 226 to hold the received 8 byte data in the write registers 223 and 224 as is. Then, the data in the write registers 223 and 224 are stored in the load data buffers 100 by a write address generated by the write address generator circuit 215 based on the write buffer number 211 and the data element number 212.

If the type of instruction is upper 4 byte load instruction VLDU, since only the upper 4 bytes in the receiving register 221 is valid data, the write selectors 225 and 226 are switched to receive data from the receiving register 221. The data from the receiving register 221 is held in the write register 223 if the data element number register 212 indicates an even number, and in the write register 224 if it indicates an odd number. Thus, when data are filled in both the write registers 223 and 224, the data in the write registers 223 and 224 are stored in the load data buffers 100 by the write address generated by the write address generator circuit 215 based on the write buffer number 211 and the data element number 212.

Similarly, if the type of instruction is lower 4 byte load instruction VLDL, because only the lower 4 byte in the receiving register 222 is valid, the write selectors 225 and 226 are switched to receive data from the receiving register 222. Then, the data from the receiving register 222 is held in the write register 223 if the data element number register 212 indicates an even number, and in the write register 224 if it indicates an odd number. Thus, when data are filled in both the write registers 223 and 224, the data in the write registers 223 and 224 are stored in the load data buffers 100 by the write address generated by the write address generator circuit 215 based on the write buffer number 211 and the data element number 212.

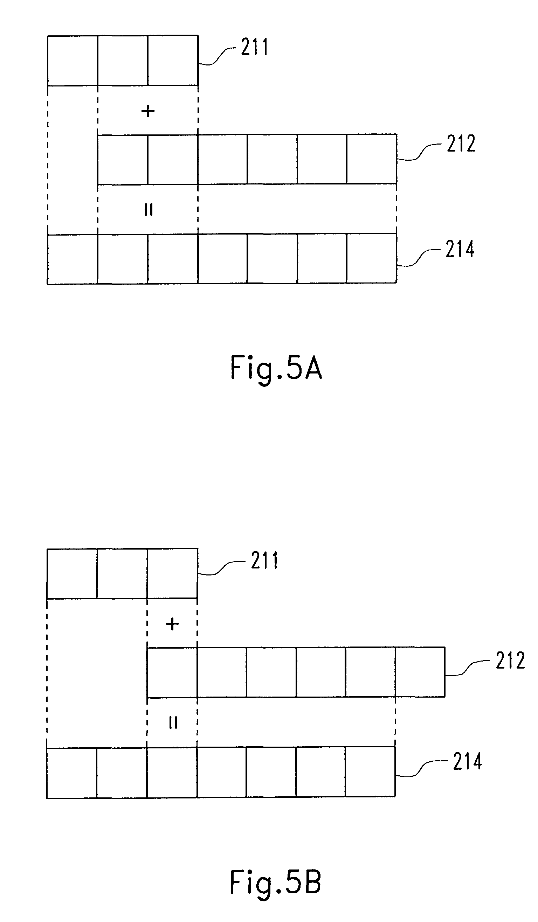

Referring to FIG. 5, the write address generator circuit 215 generates a write address for the load data buffers 100 in the following manner. Referring to FIG. 5 (A), if the type of instruction is 8 byte load instruction VLD, the lower two bits of the write buffer number register 211 and the upper two bits of the element number register 212 are added so that they are overlapped. That is, the address of the load data buffer is obtained by adding the buffer number held in the write buffer number register 211 as a start address to the element number held in the element number register 212.

Referring to FIG. 5 (B), if the type of instruction is 4 byte load instruction VLDU or VLDL, the lower one bit of the write buffer number register 211 and the upper one bit of the element number register 212 are added so that they are overlapped. That is, the address of the load data buffer is obtained by adding the buffer number held in the write buffer number register 211 as a start address to the element number held in the element number register 212 divided by two.

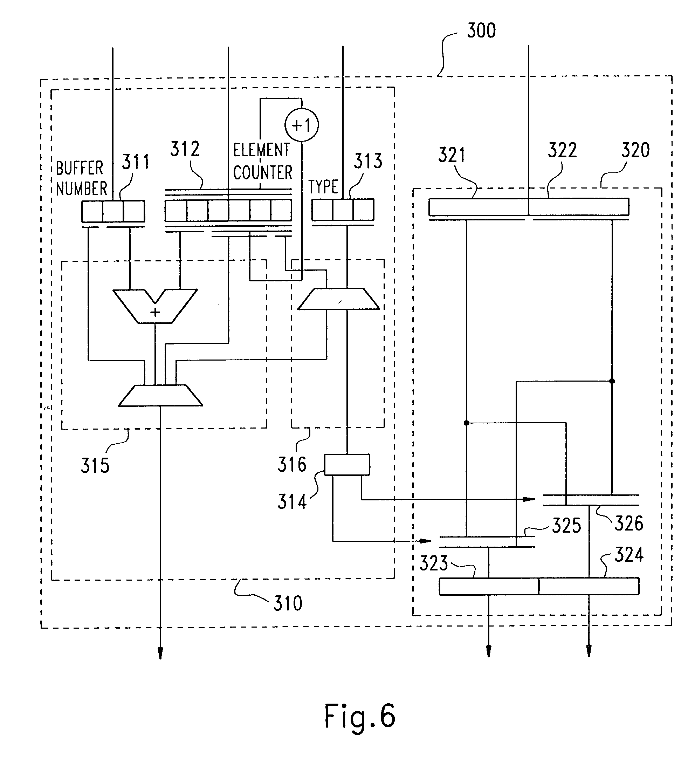

Referring to FIG. 6, the load data buffer read circuit 300 comprises a load data read control circuit 310 which includes a read buffer number register 311 holding the virtual buffer number of the load data buffer, an element number counter 312 counting element numbers in the virtual buffer of the load data buffer, a read instruction type register 313 holding the type of instructions, an alignment selector control circuit 316 generating a signal for controlling alignment selectors 325 and 324 in a load data expand circuit 320, an address generator circuit 315 generating a read address of the load data buffer, and a selector control register 314 holding the control signal from the alignment selector circuit 316. In addition, the load data buffer storing circuit 200 comprises the load data expand circuit 320 which includes read registers 321 and 322 receiving data from the load data buffer, the alignment registers 323 and 324 transferring data to the vector processor 700, and the alignment selectors 325 and 326 holding the data of the read registers 321 and 322 in the alignment registers 323 and 324.

The load data buffer read circuit 300 generates a read address by the read address generator circuit 315 based on the read buffer number 311 and the read element number counter 312. The generated read address is used for reading from the load data buffers 100. The read out data is set in the read registers 321 and 322. Furthermore, the element number counter 312 is incremented every time when one data is sent to the vector processor 700.

The type of instruction relating to the read data is determined by decoding the read instruction type register 313 with a decoder in the alignment selector control circuit 316.

If the type of instruction is 8 byte load instruction VLD, the write selector control circuit 316 controls the alignment selectors 325 and 326 to set the data of the read registers 321 and 322 in the alignment registers 323 and 324 as is. The data set in the alignment registers 323 and 324 is sent to the vector processor 700. Such operations are repeated by each machine cycle until all elements are read.

If the type of instruction is 4 byte load instruction VLDU or lower 4 byte load instruction VLDL, there exists the same data in the read registers 321 and 322 over two machine cycles. It is because only one data can be sent to the vector processor 700 in one machine cycle. The alignment selector 325 or 326 alternately switches the read register 321 or 322 by the control signal held in the selector control register 314. This causes the alignment register 323 to set data held in the read register 321 or 322 in the alignment register 323 or 324.

That is, data held in the road register 321 is selected if the element number of read data indicated by the read element number counter 312 is an even number, while data held in the read register 322 is selected if the number is an odd number. Then, if the type of instruction is upper 4 byte load instruction VLDU, the selected data is set in the alignment register 323. If the type of instruction is lower 4 byte load instruction VLDL, the selected data is set in the alignment register 324. The data set in the alignment register 323 is sent to the vector processor 700.

The method for generating the read address by the read address generator circuit 315 is similar to that by the write address generator circuit 215 described for FIG. 5. That is, if the type of instruction is 8 byte load instruction VLD, the read address is generated by the method of FIG. 5 (A), and, if it is 4 byte load instruction VLDU or VLDL, the read address is generated by the method of FIG. 5 (B).

Although the above description is made on the load data buffer storing circuit 200 and the load data read circuit 300 for the load data buffers 100, the store data buffer store circuit 500 and the store data read circuit 600 for the store data buffers 400 have similar configuration, respectively.

Next, an example of processing in the embodiment of the vector processing unit of the present invention will be described.

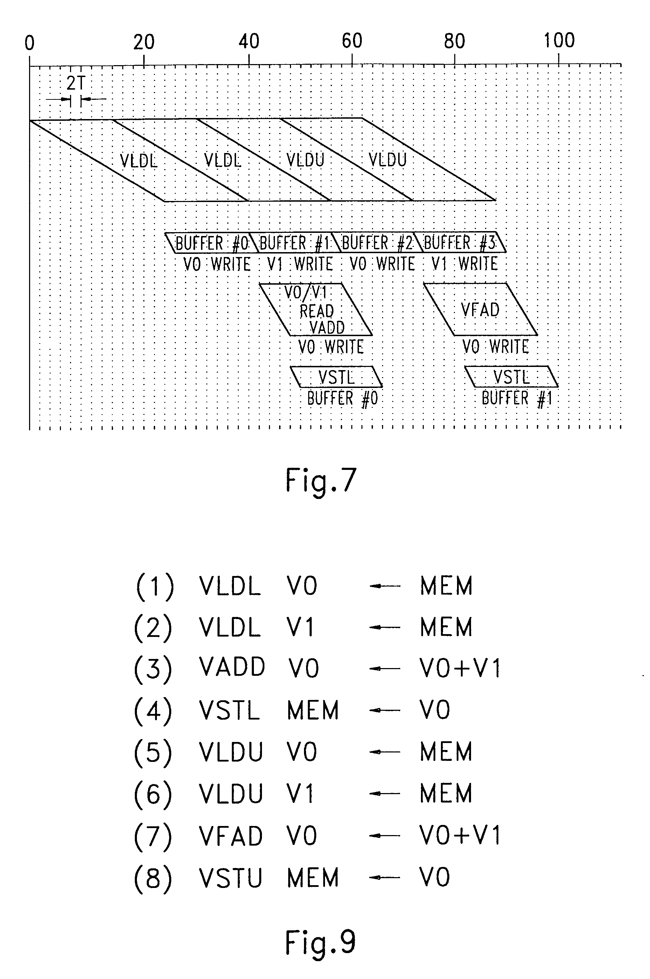

Taking the instruction sequence of FIG. 9 described above as an example, when the vector length is 16, they are executed in the embodiment as shown in FIG. 7. The vector load instructions of instructions (1), (2), (5), and (6) are assigned with the virtual buffers #0, #1, #2, and #3 of the load data buffer, respectively. Similarly, the vector store instructions of instructions (4) and (8) are assigned with the virtual buffers #0 and #1 of the store data buffer, respectively.

Referring to FIG. 7, first, the vector load instructions of instructions (1) and (2) are assigned with the virtual buffers #0 and #1 of the load data buffer 110, respectively. The vector load instructions of instructions (5) and (6) are assigned with the virtual buffers #2 and #3 of the load data buffer 110, respectively. On the other hand, the vector store instructions of instructions (4) and (8) are assigned with the virtual buffers #0 and #1 of the store data buffer 410.

When the time chart of FIG. 7 is compared with that of a conventional vector processing unit shown in FIG. 13, the embodiment enables it to perform access without any interval without being aware of the state of vector register because four virtual buffers #0, #1, #2, and #3 are provided in the load data buffer 110. Accordingly, there arises no wait for empty space in the buffer as in the prior art so that the performance can be improved.

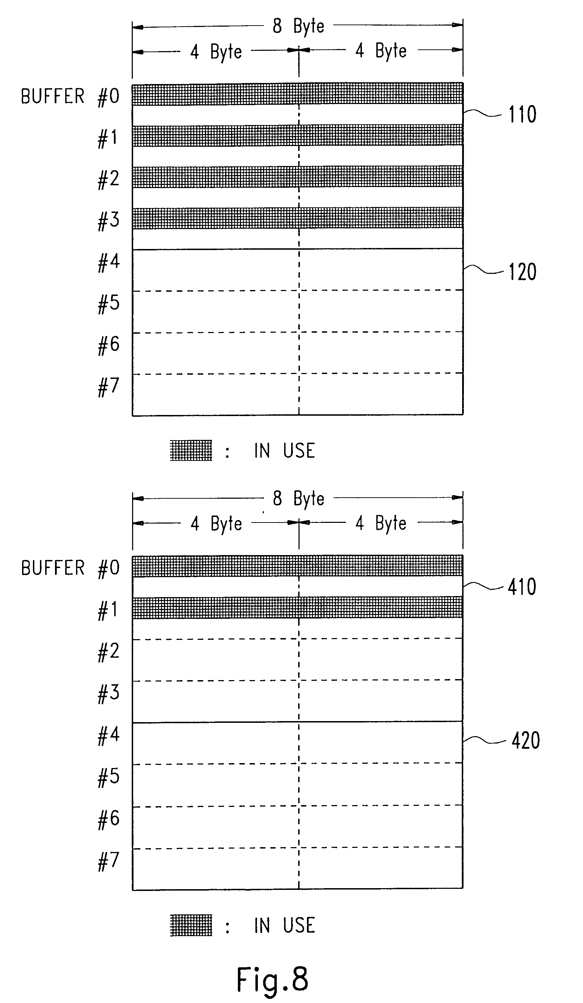

In the above processing, the load data buffer 110 and the store data buffer 410 are used as shown in FIG. 8, respectively. According to the present invention, since each data is compressed and stored in the load data buffer 110 and the store data buffer 410, the data buffer with fixed capacity can be efficiently used.

As described above, according to the present invention, the data buffer can be efficiently used even when the vector length is short by using the load data buffer and the store data buffer provided between the vector register and the storage as a plurality of virtual buffers, respectively. In addition, since the present invention has a function compressing data when it is stored in the data buffer and expanding data when it is read, the data buffer can be efficiently used even if data width is narrow.

## Claims

1. A vector processing unit, comprising:
a vector processor (700) having vector registers (720, 721);
a storage (900); and
data buffer means (100, 400), comprising load data buffers (100) located between said storage (900) and said vector processor (700) for storing data loaded from said storage (900),
characterized in that said load data buffers (100) are dividable into a plurality of virtual load buffers (110, 120) being identified by identification numbers assigned to said virtual load buffers (110, 120),
and by comprising means (210) for generating a write address to said virtual load buffers (110, 120) and means (310) for generating a read address from said virtual load buffers (110, 120) based on the identification numbers assigned to said virtual load buffers.

2. A vector processing unit according to Claim 1
characterized in that:
said load data buffer comprises:
means (220) for compressing and storing data loaded from the storage in said virtual load buffers; and
means (320) for expanding the data stored in said virtual load buffers.

3. A vector processing unit according to Claim 1
characterized in that:
said data buffer further comprises store data buffer (400 - 600) for storing data to be stored in the storage, said store data buffer having a plurality of virtual store buffers and being identified by identification numbers assigned to said virtual store buffers.

4. A vector processing unit according to Claim 3
characterized in that:
said store data buffer comprises:
means (510) for generating a store address to said virtual store buffers based on the identification numbers assigned to said virtual store buffers; and
means (610) for generating a read address from said virtual store buffers based on the identification numbers assigned to said virtual store buffers.

5. A vector processing unit according to Claim 4
characterized in that:
said store data buffer comprises:
means (520) for compressing and storing data loaded from the storage in said virtual store buffers; and
means (620) for expanding the data stored in said virtual store buffers.

## Patentansprüche

1. Vektorverarbeitungseinheit, mit:
einem Vektorprozessor (700) mit Vektorregistern (720, 721);
einem Speicher (900); und
einer Datenpuffereinrichtung (100, 400), die Ladedatenpuffer (100) enthält, die sich zwischen dem Speicher (900) und dem Vektorprozessor (700) befinden, um vom Speicher (900) geladene Daten zu speichern,
dadurch gekennzeichnet, daß die Ladedatenpuffer (100) in mehrere virtuelle Ladepuffer (110, 120) unterteilbar sind, die durch Kennummern identifiziert werden, die den virtuellen Ladepuffern (110, 120) zugewiesen sind,
und daß sie eine Einrichtung (210) zum Erzeugen einer Adresse zum Schreiben in die virtuellen Ladepuffer (110, 120) sowie eine Einrichtung (310) zum Erzeugen einer Adresse zum Lesen aus den virtuellen Ladepuffern (110, 120) anhand der den virtuellen Ladepuffern zugewiesenen Kennummern umfaßt.

2. Vektorverarbeitungseinheit nach Anspruch 1,
dadurch gekennzeichnet, daß
der Ladedatenpuffer umfaßt:
eine Einrichtung (220) zum Komprimieren und Speichern von aus dem Speicher in die virtuellen Ladepuffer geladenen Daten; und
eine Einrichtung (320) zum Expandieren der in den virtuellen Ladepuffern gespeicherten Daten.

3. Vektorverarbeitungseinheit nach Anspruch 1,
dadurch gekennzeichnet, daß
der Datenpuffer ferner einen Speicherdatenpuffer (400-600) zum Speichern von im Speicher zu speichernden Daten umfaßt, wobei der Speicherdatenpuffer mehrere virtuelle Speicherpuffer besitzt und durch Identifizierungsnummern identifiziert wird, die den virtuellen Speicherpuffern zugewiesen sind.

4. Vektorverarbeitungseinheit nach Anspruch 3,
dadurch gekennzeichnet, daß
der Speicherdatenpuffer umfaßt:
eine Einrichtung (510) zum Erzeugen einer Adresse zum Speichern in die virtuellen Speicherpuffer anhand der Kennummern, die den virtuellen Speicherpuffern zugewiesen sind; und
eine Einrichtung (610) zum Erzeugen einer Adresse zum Lesen aus den virtuellen Speicherpuffern anhand der Kennummern, die den virtuellen Speicherpuffern zugewiesen sind.

5. Vektorverarbeitungseinheit nach Anspruch 4,
dadurch gekennzeichnet, daß:
der Speicherdatenpuffer umfaßt:
eine Einrichtung (520) zum Komprimieren und Speichern von aus dem Speicher in die virtuellen Speicherpuffer geladenen Daten; und
eine Einrichtung (620) zum Expandieren der in den virtuellen Speicherpuffern gespeicherten Daten.

## Revendications

1. Unité de traitement vectoriel comprenant:
un processeur vectoriel (700) ayant des registres de vecteurs (720, 721) ;
une mémoire (900); et
des moyens de tampon de données (100, 400), comprenant des tampons de données chargées (100) situés entre ladite mémoire (900) et ledit processeur vectoriel (700) pour mémoriser des données chargées provenant de ladite mémoire (900),
caractérisée en ce que
lesdits tampons de données chargées (100) sont divisibles en une pluralité de tampons de charge virtuels (110, 120) identifiés par des numéros d'identification assignés auxdits tampons de charge virtuels (110, 120),
et en ce qu'elle comprend des moyens (210) pour engendrer une adresse d'écriture dans lesdits tampons de charge virtuels (110, 120) et des moyens (310) pour engendrer une adresse de lecture à partir desdits tampons de charge virtuels (110, 120) basée sur les numéros d'identification assignés auxdits tampons de charge virtuels.

2. Unité de traitement vectoriel selon la revendication 1, caractérisée en ce que:
ledit tampon de données chargées comprend :
des moyens (220) pour compresser et mémoriser des données chargées provenant de la mémoire dans lesdits tampons de charge virtuels; et
des moyens (320) pour décompresser les données mémorisées dans lesdits tampons de charge virtuels.

3. Unité de traitement vectoriel selon la revendication 1, caractérisée en ce que :
ledit tampon de données comprend de plus un tampon de données mémorisées (400 à 600) pour que les données mémorisées soient mémorisées dans la mémoire, ledit tampon de données mémorisées ayant une pluralité de tampons de mémoire virtuels et étant identifié par des numéros d'identification assignés auxdits tampons de mémoire virtuels.

4. Unité de traitement vectoriel selon la revendication 3, caractérisée, en ce que :
ledit tampon de données mémorisées comprend :
des moyens (510) pour engendrer une adresse mémoire dans lesdits tampons de mémoire virtuels basée sur les numéros d'identification assignés auxdits tampons de mémoire virtuels; et
des moyens (610) pour engendrer une adresse de lecture à partir desdits tampons de mémoire virtuels basée sur les numéros d'identification assignés auxdits tampons de mémoire virtuels.

5. Unité de traitement vectoriel selon la revendication 4, caractérisée en ce que :
ledit tampon de mémoire virtuel comprend :
des moyens (520) pour compresser et mémoriser des données chargées provenant de la mémoire dans lesdits tampons de mémoire virtuels; et
des moyens (620) pour décompresser les données mémorisées dans lesdits tampons de mémoire virtuels.
